# EUROPÄISCHE PATENTSCHRIFT

(11) **EP 3 075 490 B1**
(45) Veröffentlichungstag und Bekanntmachung des Hinweises auf die Patenterteilung: **17.04.2019**
(21) Anmeldenummer: 16161202.3
(22) Anmeldetag: 18.03.2016
(51) Int. Cl.: B23Q 1/62, B23Q 37/00, B23Q 39/02

(54) **BEARBEITUNGSMASCHINE**
MACHINING UNIT
MACHINE D'USINAGE

(30) Priorität: 01.04.2015 DE 102015105043
(43) Veröffentlichungstag der Anmeldung: 05.10.2016
(73) Patentinhaber: SAMAG Saalfelder Werkzeugmaschinen GmbH, 07318 Saalfeld (DE)
(72) Erfinder: Neubert, Dirk, 07743 Jena (DE)
(74) Vertreter: Steiniger, Carmen

(56) Entgegenhaltungen:
- EP-A2- 0 882 548
- WO-A1-01/17723
- DE-A1- 10 054 965
- FR-A1- 2 857 894
- GB-A- 2 260 918

## Beschreibung

Die vorliegende Erfindung betrifft eine Bearbeitungsmaschine mit wenigstens einer ersten und einer zweiten in einer ersten Achsrichtung nebeneinander angeordneten und in einer zweiten und einer dritten Achsrichtung unabhängig voneinander verfahrbaren Bearbeitungseinheit, die auf einem gemeinsamen Maschinenbett angeordnet sind, wobei beidseitig der Bearbeitungseinheiten in der ersten Achsrichtung voneinander beabstandete Ständereinheiten vorgesehen sind.

Bei bekannten Werkzeugmaschinen wird die Anzahl an Bearbeitungseinheiten bzw. Spindeln, welche die jeweilige Werkzeugmaschine umfasst, bereits bei der Entwicklung der Werkzeugmaschine festgelegt und ist während des gesamten Lebenszyklus der Werkzeugmaschine nicht mehr oder nur mit sehr viel Aufwand veränderbar. Entsprechend sind Werkzeugmaschinen, egal ob Einspindel- oder Mehrspindelwerkzeugmaschinen im Hinblick auf Produktionsbedingungen, wie zum Beispiel eine schwankende Produktnachfrage oder eine Bearbeitung von Werkstücke mit unterschiedlichen Bauteilabmessungen, wenig flexibel.

So muss sich ein Anwender beim Kauf einer Werkzeugmaschine von vornherein festlegen, ob er eine kosten- und platzintensive Werkzeugmaschine mit großer Spindelanzahl, beispielsweise aufgrund von hohen zu erwartenden Nachfragemengen, benötigt oder ob er sich eine kostengünstigere, platzsparendere Werkzeugmaschine mit geringerer Spindelanzahl und damit geringerer Ausbringungsmenge anschaffen möchte. Entsprechend sind die Hersteller bei Änderungen der Produktionsbedingungen oder einer Veränderung der Nachfrage häufig unflexibel und müssen gegebenenfalls Umsatzeinbußen aufgrund fehlender Ausbringungsmengen in Kauf nehmen oder hohe Anschaffungs- und Betriebskosten ohne entsprechende erzielte Umsätze in Kauf nehmen.

Im Stand der Technik gibt es seit Langem Einspindelwerkzeugmaschinen, deren Spindel in drei Achsrichtungen verfahrbar ist. Zudem kennt man beispielsweise aus der Druckschrift DE 20 2013 00 225 U1 Bearbeitungseinheiten mit zwei unabhängig voneinander in z-Richtung verfahrbaren, an einem Gestell befestigten Arbeitsspindeln und einem Kreuztisch, der in x- und y-Richtung verfahrbar ist.

Um auch bei Mehrspindelwerkzeugmaschinen eine erhöhte Zugänglichkeit zum Werkstück durch erhöhte Flexibilität der Spindelbewegbarkeit zu erreichen, existiert dann, wenn zwei Spindeln nebeneinander angeordnet sind, die Möglichkeit, dass die Spindeln in zwei Achsrichtungen unabhängig voneinander verstell- oder verfahrbar sind, während der Arbeitstisch in einer weiteren Achsrichtung verstellbar ist, oder dass dann, wenn mehr als zwei Spindeln nebeneinander vorgesehen sind, die Spindeln in einer Achsrichtung unabhängig voneinander bewegbar und in einer weiteren Achsrichtung miteinander verbunden und dadurch in dieser weiteren Achsrichtung gemeinsam bewegbar sind, während auch hier der Arbeitstisch relativ zu den Spindeln in einer dritten Achsrichtung verstellbar ist.

So beschreibt die Druckschrift DE 195 03 482 C2 beispielsweise eine Portalwerkzeugmaschine mit zwei voneinander beabstandeten vertikalen Säulen, an deren einander zugewandten Innenseiten vertikale Führungen vorgesehen sind, mittels welcher zwei jeweils an einem Schlitten vorgesehene Spindelstöcke unabhängigen voneinander vertikal verfahrbar sind. Eine horizontale Verfahrbarkeit der Spindelstöcke wird durch an den Schlitten vorgesehenen Horizontalführungen gewährleistet. Entsprechend sind die Spindelstöcke in zwei Bewegungsrichtungen unabhängig voneinander verfahrbar. Eine dritte Bewegungsrichtung wird durch das Verfahren eines vor den Säulen angeordneten quer zur Längsrichtung der Spindelstöcke verfahrbaren Werkstückträgers erzielt.

Um unterschiedlich große Werkstücke bearbeiten zu können, wird in der Druckschrift DE 10 2009 031 830 B3 eine CNC-Portalbearbeitungsmaschine vorgestellt, deren Bearbeitungsfeld in x- und y-Richtung vergrößerbar ist. Zum Vergrößern des Bearbeitungsfeldes in x-Richtung weist das Bearbeitungsfeld mechanische Schnittstellen als Verbindungsmittel auf, über die weitere Bearbeitungsfelder an dem ersten Bearbeitungsfeld befestigt werden können. Zum Variieren der Bereite des wenigstens einen Bearbeitungsfeldes in y-Richtung werden Portalführungsschienen der Maschine in y-Richtung auseinander gezogen und ein Fuß des Portals entlang eines Querbalkens verschoben und in seiner neuen Position fixiert. Hierfür ragt ein Querbalken des Portals über eine Seite des Bearbeitungsfeldes hinaus, wobei der Querbalken auch durch daran anschließbare Verlängerungsbalken verlängert werden kann.

Die Druckschrift DE 977 459 beinhaltet eine Hobelmaschine mit variierbarer Arbeitsbreite, wobei die Hobelmaschine zwei durch eine Traverse verbundene Ständer aufweist, welche mit einer in ein Fundament eingelassenen Grundplatte sowie einem auf der Grundplatte aufgesetzten Bett mittels Schrauben verschraubt sind. Zum Variieren der Arbeitsbreite weist die Grundplatte mehrere Bohrungen für die Verschraubungen mit dem Ständer in verschiedenen Abständen entsprechend verschiedenen Stellungen des Ständers auf.

In der Druckschrift FR 2 857 894 A1 ist eine Bearbeitungsmaschine mit zwei Bearbeitungsmodulen offenbart, welche in drei Achsrichtungen unabhängig voneinander verfahrbar sind. Die Bearbeitungsmodule sind hierfür an einem C-Gestell vorgesehen, welches mittels oberer und unterer horizontaler Führungen entlang einer ersten Achse verfahrbar ist. Vertikale an den C-Gestellen vorgesehene Führungen ermöglichen eine Bewegung der Bearbeitungsmodule in einer zweiten Achsrichtung. Ein Verfahren der Bearbeitungsmodule in eine dritte Achsrichtung wird durch ein teleskopartig ausgebildetes Element ermöglicht.

Die Druckschrift WO 01/17723 A1 beinhaltet eine Werkzeugmaschine, welche eine unabhängige Bewegung von zwei werkzeugaufnehmenden Hülsen in drei Achsrichtungen ermöglicht. Hierzu weist die Werkzeugmaschine drei Schienenpaare auf. Ein erstes Schienenpaar dient der Führung zweier senkrechter, C-förmig ausgebildeter Halbtische entlang einer X-Achse. Ein zweites, an den Halbtischen angeordnetes Schienenpaar dient der Führung jeweils eines Spindelkastens in Y-Richtung und ein drittes Schienenpaar ist in jedem Spindelkasten vorgesehen und ermöglicht eine Führung der Hülse in Z-Richtung.

Eine Funkenerosionsmaschine mit zwei in drei Achsrichtungen bewegbaren Werkzeugaufnahmen ist in der Druckschrift GB 2 260 918 A beschrieben. Die in eine erste Achsrichtung verfahrbaren Werkzeugaufnahmen sind an Haltevorrichtungen vorgesehen, welche entlang jeweils eines Portals in eine zweite Achsrichtung verfahrbar sind. Die Portale wiederum sind entlang eines Maschinenbettes in eine dritte Achsrichtung bewegbar, sodass eine Bewegung eines von der Werkzeugaufnahme aufgenommenen Werkzeuges in drei Achsrichtungen ermöglicht wird.

In der Druckschrift EP 0 882 548 A2 ist ein CNC-Dreh- und Fräsbearbeitungszentrum mit in Z-Richtung verfahrbaren Längsschlitten, auf dem zwei Querschlitten nebeneinander und je für sich verstell- und verschiebbar angeordnet sind, offenbart. Auf den Querschlitten ist jeweils ein Werkzeugträger angeordnet, welcher in X- und Y-Richtung verschiebbar und um eine B-Achse schwenkbar ist.

Es ist die Aufgabe der vorliegenden Erfindung, eine Bearbeitungsmaschine mit mehreren Bearbeitungseinheiten gemäß der oben genannten Gattung zur Verfügung zu stellen, welche eine gegenüber bekannten Bearbeitungsmaschinen erhöhte Produktionsflexibilität aufweist.

Die Aufgabe der vorliegenden Erfindung wird durch eine Bearbeitungsmaschine gemäß Anspruch 1 gelöst.

Die unabhängige Verfahrbarkeit der wenigstens zwei Bearbeitungseinheiten in drei unterschiedlichen Achsrichtungen gemäß der ersten Gestaltungsvariante der erfindungsgemäßen Bearbeitungsmaschine ermöglicht eine flexible Fertigung von Werkstücken ohne gleichzeitig bewegbaren Arbeitstisch. So können mit dieser erfindungsgemäßen Bearbeitungsmaschine gleichzeitig wenigstens zwei Werkstücke bearbeitet werden, wobei jeweils eine Bearbeitungseinheit ein Werkstück bearbeitet und die Bearbeitungseinheiten dabei entweder gleiche Bearbeitungsvorgänge oder unterschiedliche Bearbeitungsvorgänge zeitlich parallel ausführen können. Insbesondere die Mehrachsbearbeitung bietet dabei die Vorteile, dass Werkstücke mit aufwändiger Geometrie und hoher Komplexität gefertigt werden können, es können Fehlerquellen, welche beispielsweise beim Umspannen der Werkstücke entstehen können, minimiert werden, Bearbeitungszeiten können verkürzt werden und es kann eine verbesserte Oberflächengüte der Werkstücke erzielt werden.

Gemäß der ersten Gestaltungsvariante der erfindungsgemäßen Bearbeitungsmaschine werden die Bearbeitungseinheiten an oberen und unteren Führungen, deren Längsseiten in der ersten Achsrichtung ausgerichtet sind, geführt. Dabei können die Bearbeitungseinheiten entweder unabhängig voneinander oder miteinander gekoppelt entlang der oberen und unteren Führungen in Richtung der ersten Achsrichtung bewegt werden.

Ein weiterer Aspekt der ersten Gestaltungsvariante der vorliegenden Erfindung ist, dass die Bearbeitungseinheiten an oberen und unteren Führungen geführt und dabei an diesen verfahrbar sind, sodass die Bearbeitungseinheiten unabhängig voneinander, aufeinander zu, voneinander weg oder auch miteinander verfahren werden können. Durch diese Verfahrbarkeit kann der Abstand zwischen den Bearbeitungseinheiten einfach variiert werden und somit beispielsweise Platz für eine Unterbringung wenigstens einer weiteren Bearbeitungseinheit zwischen oder neben den wenigstens zwei bereits vorhandenen Bearbeitungseinheiten geschaffen werden. Das Vorsehen wenigstens einer weiteren Bearbeitungseinheit bietet den Vorteil, dass mit der Bearbeitungsmaschine gleichzeitig eine höhere Anzahl an Werkstücken bearbeitet werden kann, wodurch die Ausbringungsmenge der Bearbeitungsmaschine gesteigert werden kann, ohne dass hohe Zusatzkosten verursacht werden.

Die obere und/oder die untere Führung kann über die Breite der wenigstens zwei Bearbeitungseinheiten hinausragen. Es können auch mehrere obere als auch untere Führungen an der Bearbeitungsmaschine vorgesehen sein. Die untere und/oder die obere Führung kann zweckmäßigerweise jeweils durch eine oder wenigstens zwei parallele durchgängige Führungsschiene(n) ausgebildet sein. Alternativ ist es möglich, dass die obere und/oder die untere Führung jeweils aus wenigstens zwei miteinander verbundenen Führungsschienen ausgebildet ist. So kann beispielsweise an jeder einzelnen der Bearbeitungseinheit wenigstens eine zugehörige Führungsschiene vorgesehen sein, wobei die an den wenigstens zwei Bearbeitungseinheiten vorgesehenen Führungsschienen voneinander beabstandet, nebeneinander an der Bearbeitungsmaschine vorgesehen sind.

Gemäß der ersten Gestaltungsvariante, können die Führungen auch durch Anbringen wenigstens eines zusätzlichen Führungselementes verlängert werden, durch das der Abstand zwischen wenigstens zwei der Bearbeitungseinheiten vergrößert werden kann, was es ermöglicht, eine Anzahl an zusätzlichen Bearbeitungseinheiten zwischen den wenigstens zwei Bearbeitungseinheiten vorzusehen oder größere Werkstücke mit der Bearbeitungsmaschine zu bearbeiten.

Die zweite Gestaltungsvariante der vorliegenden Erfindung, bei der die Bearbeitungsmaschine eine solche Arbeitsbreite aufweist, dass wenigstens eine dritte Bearbeitungseinheit in der ersten Achsrichtung neben der ersten und/oder der zweiten Bearbeitungseinheit vorsehbar und wieder ausbaubar ist, wobei alle Bearbeitungseinheiten baugleich sind und/oder gleiche Verfahrwege aufweisen, ist sowohl eigenständig als auch in Zusammenhang mit der oben erläuterten ersten Gestaltungsvariante der Erfindung anwendbar.

Die Bearbeitungsmaschine ist gemäß der zweiten Gestaltungsvariante so konstruktiv aufgebaut, dass ihre Arbeitsbreite zwar fest aber so festgelegt ist, dass wenigstens eine weitere Bearbeitungseinheit, mit gleicher Bauweise und/oder gleichem Verfahrweg, in der ersten Achsausrichtung vorsehbar und wieder ausbaubar ist. Eine solche Ausgestaltung der Bearbeitungsmaschine kann mit besonders hoher mechanischer Stabilität zur Verfügung gestellt werden.

Die in der zweiten Gestaltungsvariante der erfindungsgemäßen Bearbeitungsmaschine zusätzlich in der Bearbeitungsmaschine integrierbare und aus dieser auch wieder ausbaubare Bearbeitungseinheit weist die gleiche Bauweise und gleiche Verfahrwege wie die wenigstens zwei von der Bearbeitungsmaschine bereits umfassten Bearbeitungseinheiten auf. Dies ist vorteilhafterweise, aber nicht unbedingt auch in der oben erläuterten ersten Gestaltungsvariante der erfindungsgemäßen Bearbeitungsmaschine der Fall. Es ist jedoch auch möglich, dass alle Bearbeitungseinheiten der Bearbeitungsmaschine nur gleiche Verfahrwege oder nur eine gleiche Bauweise aufweisen.

Durch die Variierbarkeit des Abstandes zwischen den Bearbeitungseinheiten besteht die Möglichkeit, die Bearbeitungseinheiten der Bearbeitungsmaschine einfach auszutauschen und durch wenigstens eine andere Bearbeitungseinheit mit einem anderen Verfahrweg und/oder einer anderen Bauweise zu ersetzen. In diesem Fall kann die von der Bearbeitungsmaschine umfasste Anzahl an Bearbeitungseinheiten entweder konstant bleiben, verringert oder erhöht werden. Durch das Austauschen, Ausbauen oder Ergänzen wenigstens einer Bearbeitungseinheit können problemlos Werkstücke mit anderen Abmessungen, Geometrien und/oder Werkstoffeigenschaften von der erfindungsgemäßen Bearbeitungsmaschine bearbeitet werden.

Bei der zweiten Gestaltungsvariante der erfindungsgemäßen Bearbeitungsmaschine ist es nicht zwingend notwendig, dass die Bearbeitungseinheiten oben und unten geführt werden. Vielmehr können die Ständereinheiten der als Portalmaschine ausgebildeten Bearbeitungsmaschine bzw. die Bearbeitungseinheiten auch nur durch wenigstens eine untere Führung geführt werden, um so die Bewegung der Bearbeitungseinheiten in allen drei Bewegungsrichtungen realisieren zu können. Hierbei können die Bearbeitungseinheiten beispielsweise einfach an einer zwischen den Ständereinheiten befindlichen Brücke der Bearbeitungsmaschine vorgesehen werden. Ebenso kann auch nur wenigstens eine obere oder nur wenigstens sein untere Führung für die Bearbeitungseinheiten an der Bearbeitungsmaschine vorgesehen sein. Diese wenigstens eine obere oder untere Führung kann beispielsweise an einer Brücke der Bearbeitungsmaschine angebracht sein.

Sowohl bei der ersten als auch bei der zweiten Gestaltungsvariante der vorliegenden Erfindung kann die wenigstens eine zusätzlich vorgesehene Bearbeitungseinheit beispielsweise neben wenigstens einer bereits vorhandenen Bearbeitungseinheit der Bearbeitungsmaschine vorgesehen sein, ohne mit dieser mechanisch verbunden zu sein, kann jedoch auch mit zwei oder mehreren der bereits vorhandenen Bearbeitungseinheiten gekoppelt werden. Zudem kann die wenigstens eine weitere Bearbeitungseinheit auch separat von den weiteren Bearbeitungseinheiten beispielsweise an einer Brücke der Bearbeitungsmaschine vorgesehen sein. Hierfür können an einer solchen Brücke beispielsweise weitere Führungen und/oder Haltevorrichtungen vorgesehen sein.

Das Verfahren der Bearbeitungseinheiten wird bei der erfindungsgemäßen Bearbeitungsmaschine vorzugsweise mittels eines Linearmotors oder eines Gewindetriebes realisiert, wobei die Ausgestaltung und Anordnung eines solchen Antriebes an der Bearbeitungsmaschine variabel ist und an die jeweiligen Einsatzbedingungen angepasst werden kann. Erfindungsgemäß besteht die Möglichkeit, an jeder Führung einen separaten Antrieb und/oder eine Bremsvorrichtung vorzusehen. ferner ist es möglich, dass über einen Antrieb mehrere Bearbeitungseinheiten der Bearbeitungsmaschine angetrieben werden oder mit einem Antrieb nur einzelne Achsrichtungen der Bearbeitungseinheiten antreibbar sind.

Erfindungsgemäß sind die wenigstens zwei Bearbeitungseinheiten auf einem gemeinsamen Maschinenbett, an zwei in der ersten Achsrichtung voneinander beabstandeten Ständereinheiten angeordnet. Dabei sind wenigstens zwei der Bearbeitungseinheiten vorzugsweise jeweils an den sich in der ersten Achsrichtung gegenüber liegenden Seiten der Ständereinheiten befestigt. Hierbei sind die Bearbeitungseinheiten derart vorgesehen, dass sie in allen drei Achsrichtungen verfahrbar sind.

Vorzugsweise sind hierbei an den Ständereinheiten beispielsweise an ihren in der ersten Achsausrichtung gegenüber liegenden Seiten in der zweiten Achsrichtung verlaufende Führungen vorgesehen. An diesen Führungen ist besonders bevorzugt jeweils ein entlang dieser Führung verfahrbarer, die Bearbeitungseinheit aufnehmender Schlitten angeordnet, welcher es ermöglicht, dass die wenigstens eine daran angebrachte Bearbeitungseinheit entlang der zweiten und dritten Achsrichtung bewegbar ist. Die Bewegung der Bearbeitungseinheiten entlang der ersten Achsrichtung kann beispielsweise durch ein Verfahren der Ständereinheiten realisiert werden.

In einer besonders bevorzugten Ausführungsvariante der erfindungsgemäßen Bearbeitungsmaschine sind die Ständereinheiten an den oberen und unteren Führungen geführt verfahrbar. Hierbei sind die oberen und unteren Führungen in funktionsgerechter Ausrichtung der Bearbeitungsmaschine an nach oben bzw. nach unten zeigenden Seiten der Ständereinheiten vorgesehen, sodass die Ständereinheiten miteinander, zueinander und gegeneinander verfahrbar sind. Besonders bevorzugt sind die unteren Führungen hierbei an dem gemeinsamen Maschinenbett vorgesehen, wohingegen die oberen Führungen an einem oberen Teil der Bearbeitungsmaschine, beispielsweise an einer Brücke der Bearbeitungsmaschine, angebracht sind. In einer weiteren Ausführungsform der Erfindung können die oberen als auch die unteren Führungen auch in einem oberen bzw. unteren Bereich von Seitenflächen der Ständereinheiten angebracht sein.

Durch ein Verfahren der Ständereinheiten können während oder nach eines Bearbeitungsprozesses Prozesskorrekturen vorgenommen werden, um in Folgeprozessen Probleme aus vorhergehenden Prozessabläufen ausgleichen zu können. Ferner kann durch das Verfahren der Ständereinheiten aber auch wie zuvor beschrieben die Arbeitsbreite zwischen den Ständereinheiten variiert werden, wodurch der Arbeitsraum vergrößert werden kann und einfach wenigstens eine weitere Bearbeitungseinheit in dem Arbeitsbereich der Bearbeitungsmaschine vorgesehen werden kann. Erfindungsgemäß kann diese wenigstens eine weitere Bearbeitungseinheit auch wieder ausgebaut werden und der Bearbeitungsraum zwischen den Ständereinheiten wieder verkleinert werden. Das Ändern der Bearbeitungsbreite zwischen den Ständereinheiten bietet nicht nur den Vorteil, dass weitere Bearbeitungseinheiten vorgesehen werden können, vielmehr können durch die hierdurch ermöglichte Änderbarkeit der Arbeitsbreite auch Werkstücke mit unterschiedlichen Abmessungen bearbeitet werden.

Die Verfahrbarkeit der Ständereinheiten kann kontinuierlich oder auch abschnittweise, zum Beispiel in vorgegebenen Stufen, vorgesehen sein.

Erfindungsgemäß können die Ständereinheiten genauso wie die Bearbeitungseinheiten eine gemeinsame, die Ständereinheiten verbindende, obere als auch untere Führung aufweisen oder mit einer solchen Führung verbunden oder koppelbar sein oder jeweils separate obere und untere Führungen aufweisen. Ebenso besteht die Möglichkeit, dass mehrere obere und/oder untere Führungen an den oder für die Ständereinheiten vorgesehen sind.

Die Bewegung der Ständereinheiten entlang der Führungen kann beispielsweise durch einen Linearmotor oder einen Gewindetrieb realisiert werden. Die Anordnung und Ausgestaltung des Antriebes ist dabei variabel gestaltbar und damit an die jeweiligen Anforderungen und Einsatzbedingungen der Bearbeitungsmaschine anpassbar.

Eine weitere bevorzugte Ausgestaltungsvariante der erfindungsgemäßen Bearbeitungsvorrichtung sieht vor, dass wenigstens zwei der Bearbeitungseinheiten in der ersten, der zweiten und/oder der dritten Achsrichtung gekoppelt oder koppel- und entkoppelbar sind. Ein Koppeln der Bearbeitungseinheiten bietet den Vorteil, dass zum Verfahren mehrerer Bearbeitungseinheiten weniger Antriebseinheiten notwendig sind, womit die Kosten der Bearbeitungseinheit minimiert werden können. Zudem kann durch das Koppeln der Bearbeitungseinheiten auch der Programmier- und/oder Bedienaufwand der Bearbeitungsmaschine reduziert werden.

Eine Kopplung der Bearbeitungseinheiten bietet sich insbesondere dann an, wenn eine unabhängige Bewegung der Bearbeitungseinheiten in wenigstens einer der drei unterschiedlichen Achsrichtungen nicht erforderlich ist. Um jedoch bei Bedarf eine Bewegung der Bearbeitungseinheiten in allen drei Achsrichtung realisieren zu können, ist es besonders empfehlenswert, die zwischen den Bearbeitungseinheiten verwendete Kopplungsvorrichtung derart auszugestalten oder auszuwählen, dass die Bearbeitungseinheiten wieder entkoppelbar sind.

In Abhängigkeit vom Produktionsprozess können alle Bewegungsrichtungen der entsprechenden Bearbeitungseinheiten gekoppelt werden oder lediglich ein oder zwei Bewegungsrichtungen der Bearbeitungseinheiten gekoppelt werden.

Ebenso ist die Anzahl der gekoppelten bzw. koppelbaren Bearbeitungseinheiten frei wählbar. So ist es nicht zwingend erforderlich, dass alle von der Bearbeitungsmaschine vorgesehenen Bearbeitungseinheiten gekoppelt werden. Vielmehr können auch nur zwei, drei oder eine andere Anzahl an Bearbeitungseinheiten gekoppelt werden.

Zudem ist es möglich, die Bewegung von wenigstens zwei der Bearbeitungseinheiten nur hinsichtlich einzelner und nicht aller Achsrichtungen zu koppeln.

In einer weiteren bevorzugten Ausgestaltungsform der Bearbeitungsmaschine ist wenigstens eine der Bearbeitungseinheiten um die erste und/oder die zweite Achsrichtung schwenkbar, sodass eine flexible Vier- oder Fünfachsbearbeitung von Werkstücken möglich ist. Besonders bevorzugt sind die Bearbeitungseinheiten hierbei unabhängig voneinander bewegbar, sodass die Bearbeitungseinheiten unabhängig voneinander um die erste und/oder zweite Achsrichtung schwenkbar sind. Hierbei können die Schwenkbewegungen der einzelnen Bearbeitungseinheiten zueinander, gegeneinander, miteinander oder in unterschiedlichen Winkelausrichtungen zueinander ausgeführt werden.

In einer alternativen Ausgestaltungsvariante der erfindungsgemäßen Bearbeitungsmaschine sind wenigstens zwei der Bearbeitungseinheiten in ihrer Schwenkbewegung um die erste und/oder zweite Achsrichtung gekoppelt oder koppel- und entkoppelbar. Ebenso wie das Koppeln der Linearbewegung der Bearbeitungseinheiten bietet auch das Koppeln von Schwenkbewegungen der Bearbeitungseinheiten den Vorteil, dass weniger Antriebe notwendig sind und damit die Kosten gesenkt werden können sowie der Programmier- und/oder Bedienaufwand der Bearbeitungsmaschine reduziert werden kann.

Die Kopplung der Schwenkbewegung der einzelnen Bearbeitungseinheiten kann dauerhaft sein, bevorzugt ist diese jedoch wieder lösbar, sodass die Schwenkbewegung der Bearbeitungseinheiten bei Bedarf unabhängig voneinander realisiert werden kann.

In einem weiteren Ausführungsbeispiel der erfindungsgemäßen Bearbeitungseinheit ist wenigstens ein Schaltschrank der Bearbeitungsmaschine in der oberen Hälfte der Bearbeitungsmaschine angeordnet ist. Durch eine solche Anordnung kann der Bereich rund um die Bearbeitungsmaschine freigehalten werden, wodurch eine bessere Zugänglichkeit zu den Komponenten der Bearbeitungsmaschine erreicht werden kann, was wiederum beispielsweise Installations- und/oder Wartungsarbeiten an der Bearbeitungsmaschine vereinfacht.

Als obere Hälfte der Bearbeitungsmaschine ist jene Hälfte anzusehen, welche in funktionsgerechter Ausrichtung bzw. Aufstellung der Bearbeitungsmaschine oberhalb der Mitte der Höhe der Bearbeitungsmaschine liegt. Vorzugsweise ist der Schaltschrank an einer in dieser Aufstellung der Bearbeitungsmaschine nach oben ausgerichteten, als Maschinendach dienenden Fläche angebracht. Dies bietet den Vorteil, dass der Schaltschrank einfach auf die Maschine gelegt werden kann, ohne dass eine aufwändige Befestigungsvorrichtung für den Schaltschrank an der Bearbeitungsmaschine vorgesehen werden muss. Der Schaltschrank kann jedoch auch an wenigstens einer Seitenwand der Bearbeitungsmaschine vorgesehen sein, was den Vorteil bietet, dass er besonders leicht zugänglich ist. Hierbei kann der Schaltschrank entweder mittels einer separaten Befestigungsvorrichtung an der Seitenwand der Bearbeitungsmaschine angebracht sein oder einfach mit der Bearbeitungsmaschine verschraubt, vernietet oder verschweißt sein. In Abhängigkeit von dem Standort und dem Aufbau der Bearbeitungsmaschine kann die Anordnung des Schaltschrankes variabel ausgewählt werden.

Bevorzugte Ausführungsformen der vorliegenden Erfindung, deren Aufbau, Funktion und Vorteile werden im Folgenden anhand von Figuren näher erläutert, wobei
- Figur 1: schematisch eine mögliche Ausgestaltung einer erfindungsgemäßen Bearbeitungsmaschine in einer Vorderansicht zeigt;
- Figur 2: schematisch die Bearbeitungsmaschine aus Figur 1 in einer perspektivischen Vorderansicht von schräg oben zeigt;
- Figur 3a: schematisch ein weiteres Gestaltungsbeispiel einer erfindungsgemäßen Bearbeitungsmaschine in einer Vorderansicht zeigt;
- Figur 3b: schematisch die in Figur 3a gezeigte Bearbeitungsmaschine mit einer zusätzlichen Bearbeitungseinheit in einer Vorderansicht zeigt; und
- Figur 4: schematisch noch eine weitere Ausgestaltungsvariante einer erfindungsgemäßen Bearbeitungsmaschine in einer Vorderansicht zeigt.

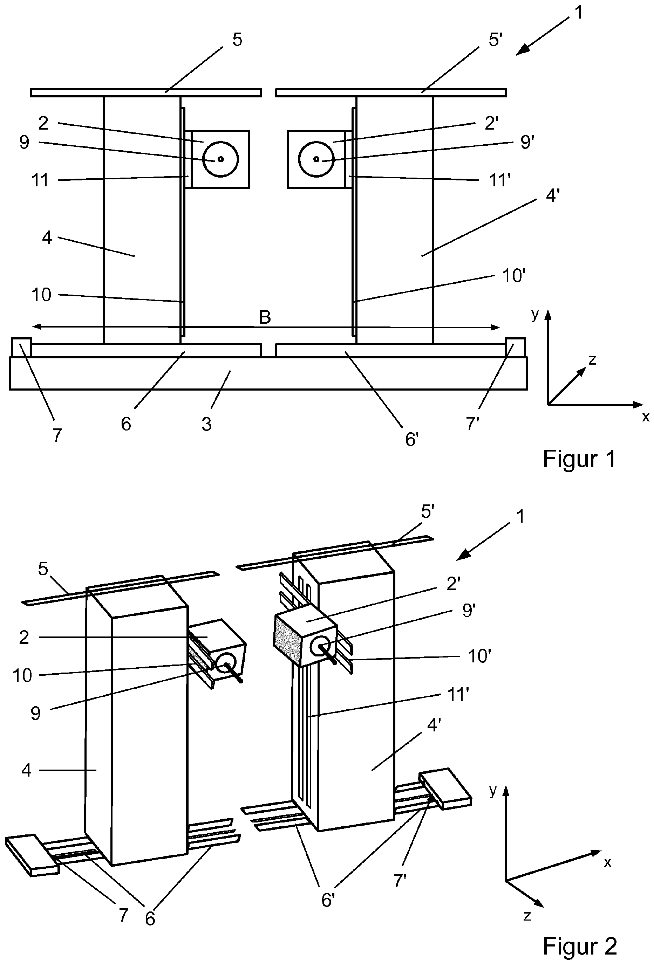

Figur 1 zeigt schematisch eine mögliche Ausgestaltung einer erfindungsgemäßen Bearbeitungsmaschine 1 in einer Vorderansicht.

Die Bearbeitungsmaschine 1 ist in dem gezeigten Ausführungsbeispiel eine Werkzeugmaschine mit wenigstens zwei Bearbeitungseinheiten 2, 2' in Form von Spindeln.

Die in Figur 1 gezeigte Bearbeitungsmaschine 1 weist ein Maschinenbett 3 auf, auf dem zwei Ständereinheiten 4, 4' vorgesehen sind. Die Ständereinheiten 4, 4' sind jeweils von einer auf dem Maschinenbett 3 vorgesehenen horizontalen unteren Führung 6, 6' und einer horizontalen oberen Führung 5, 5' entlang einer ersten Achsrichtung x geführt. Die gezeigten Ständereinheiten 4, 4' sind unabhängig voneinander verfahrbar und können so zueinander, gegeneinander und miteinander verfahren werden. Eine derartige Verfahrbarkeit der Ständereinheiten 4, 4' erzeugt eine hohe Flexibilität der Bearbeitungsmaschine 1 sowie eine hohe Produktionsgenauigkeit. Die Verfahrbarkeit der Ständereinheiten 4, 4' ermöglicht es nicht nur, weitere oder alternative Bearbeitungseinheiten 2, 2' im Austausch oder in Ergänzung zu den bereits an der Bearbeitungsmaschine 1 vorgesehenen Bearbeitungseinheiten 2, 2' an der Bearbeitungsmaschine 1 vorzusehen sowie eine Vielzahl an unterschiedlichen Werkstücken zu bearbeiten, sondern dient auch dazu, während eines Bearbeitungsprozesses Korrekturen an den Prozessen vorzunehmen, um in folgenden Bearbeitungsprozessen Probleme aus vorrangegangenen Prozesses vermeiden bzw. ausgleichen zu können.

In weiteren Ausgestaltungsvarianten der Bearbeitungsmaschine 1 können die Ständereinheiten 4, 4' jedoch auch gekoppelt sein, um so beispielsweise die Kosten und den Programmier- und/oder Bedienaufwand der Bearbeitungsmaschine 1 gering zu halten. Dabei können die Ständereinheiten 4, 4' wieder entkoppelbar sein, da so die Flexibilität der Bearbeitungsmaschine nicht unnötig eingeschränkt wird.

In dem in Figur 1 gezeigten Ausführungsbeispiel der Bearbeitungsmaschine 1 sind die Bearbeitungseinheiten 2, 2' an den Ständereinheiten 4, 4' angebracht. Die Bearbeitungseinheiten 2, 2' sind auf horizontalen Führungen 11, 11', welche in Form von Schlitten an an den Ständereinheiten 4, 4' angebrachten vertikalen Führungen 10, 10' vorgesehen sind, verfahrbar.

Die an den Ständereinheiten 4, 4' positionierten vertikalen Führungen 10, 10' sind in dem gezeigten Ausführungsbeispiel an sich in der ersten Achsrichtung x gegenüber liegenden Seiten der Ständereinheiten 4, 4' vorgesehen. An den vertikalen Führungen 10, 10' sind die Bearbeitungseinheiten 2, 2' entlang der zweiten Achsrichtung y verfahrbar.

Die horizontalen Führungen 11, 11' ermöglichen eine Bewegung der Bearbeitungseinheiten 2, 2' in Richtung der dritten Achsrichtung z.

Ein Verfahren der Bearbeitungseinheiten 2, 2' entlang der ersten Achsrichtung x wird durch eine geführte Bewegung der Ständereinheiten 4, 4' entlang der Führungen 5, 5', 6, 6' ermöglicht. Die Bewegung der Ständereinheiten 4, 4' wird vorzugsweise mittels Linearmotoren 7, 7' realisiert, kann aber auch mittels eines Gewindetriebes oder eines anderen Antriebes erzeugt werden. Ferner muss der Antrieb 7, 7' nicht wie in dem in Figur 1 veranschaulichten Ausführungsbeispiel an Enden der Führungen 6, 6' angebracht sein, sondern kann an jeder beliebigen Stelle der Bearbeitungsmaschine 1 oder außerhalb der Bearbeitungsmaschine 1 positioniert sein. Ebenso ist auch die Dimensionierung der Antriebe 7, 7' variabel und kann an die Einsatzbedingungen des Antriebes 7, 7' angepasst werden. Zudem kann ein Antrieb 7, 7', wie zuvor beschrieben, auch als Antrieb für mehrere Bearbeitungseinheiten 2, 2' und/oder für eine Bewegung in mehreren Achsrichtungen dienen.

Ebenso wie die Ständereinheiten 4, 4' sind auch die horizontalen Führungen 11, 11' und die Bearbeitungseinheiten 2, 2' durch hier nicht veranschaulichte Antriebe bewegbar. Auch die hierfür genutzten Antriebe sind hinsichtlich ihrer Dimensionierung und Anordnung an der Bearbeitungsmaschine 1 weitgehend variabel. Zudem besteht wie oben beschrieben auch die Möglichkeit, dass mehrere Komponenten der Bearbeitungsmaschine 1 von einem gemeinsamen Antrieb angetrieben werden.

Die Arbeitsbreite B der Bearbeitungsmaschine 1 ist durch den Abstand zwischen den Ständereinheiten 4, 4' bestimmt. Durch das Verfahren der Ständereinheiten 4, 4' auseinander kann die Arbeitsbreite B der Bearbeitungsmaschine 1 vergrößert werden, und durch das Verfahren der Ständereinheiten 4, 4' aufeinander zu kann die Arbeitsbreite B der Bearbeitungsmaschine 1 verkleinert werden. Die maximale Arbeitsbreite B ist durch die Länge der oberen und unteren Führungen 5, 5', 6, 6' begrenzt, wobei die Arbeitsbreite B durch das Anbringen weiterer Führungselemente an den Enden der oberen und unteren Führungen 5, 5', 6, 6' vergrößert werden kann. Hierbei ist es besonders vorteilhaft, wenn der Antrieb 7, 7' derart flexibel ist, dass seine Position ohne Weiteres geändert werden kann. Zudem besteht aber auch die Möglichkeit, bei Verlängerung der Führungen 5, 5', 6, 6' den Antrieb 7, 7' durch einen neuen Antrieb auszutauschen.

Das Verfahren der Ständereinheiten 4, 4' und damit das Variieren der Arbeitsbreite B ermöglicht es, dass an der Bearbeitungsmaschine 1, wie zuvor geschildert, Werkstücke mit unterschiedlichen Abmessungen optimal bearbeitet werden können und dass wenigstens eine zusätzliche Bearbeitungseinheit 2" an der Bearbeitungsmaschine 1 vorgesehen werden kann, wodurch die Ausbringungsmenge der Bearbeitungsmaschine 1 erhöht werden kann. Die wenigstens eine zusätzliche Bearbeitungseinheit 2" kann beispielsweise zwischen den oder auch neben einer der Bearbeitungseinheiten 2, 2' vorgesehen werden und/oder mit diesen oder dieser mechanisch gekoppelt werden. Die zusätzliche Bearbeitungseinheit 2" kann mit einer oder beiden benachbarten Bearbeitungseinheiten 2, 2' gekoppelt werden oder mechanisch völlig separat von der Bewegung der wenigstens zwei an der Bearbeitungsmaschine 1 bereits vorhandenen Bearbeitungseinheiten 2, 2' an der Bearbeitungsmaschine 1 vorgesehen sein.

In dem in Figur 1 veranschaulichten Ausführungsbeispiel weisen die Bearbeitungseinheiten 2, 2' gleiche Bauweisen auf, können in alternativen Ausgestaltungsvarianten jedoch auch unterschiedliche Bauweisen aufweisen. Zudem weisen die Bearbeitungseinheiten 2, 2' in dem Beispiel von Figur 1 auch gleiche Verfahrwege auf, können jedoch auch unterschiedliche Verfahrwege besitzen.

Die in die Figur 1 gezeigte Bearbeitungsmaschine 1 weist ein sie umgebendes Gehäuse auf, welches der Übersichtlichkeit halber nicht dargestellt ist.

Figur 2 zeigt schematisch die Bearbeitungsmaschine 1 von Figur 1 in einer Vorderansicht von schräg oben. Dabei bezeichnen gleiche Bezugszeichen wie in Figur 1 gleiche Komponenten, weshalb an dieser Stelle auf die vorhergehende Beschreibung dieser Komponenten verwiesen wird.

Auch in Figur 2 wurde zur besseren Veranschaulichung der erfindungsgemäßen Bearbeitungsmaschine 1 das Gehäuse der Bearbeitungsmaschine 1 nicht dargestellt.

In Figur 2 ist die Bewegbarkeit der Bearbeitungseinheiten 2, 2' mittels der horizontalen Führungen 11, 11' in der dritten Achsrichtung z veranschaulicht. Auch die Bewegung der Bearbeitungseinheiten 2, 2' in der zweiten Achsrichtung y entlang der vertikalen Führungen 10, 10' ist in Figur 2 ersichtlich.

In dem gezeigten Ausführungsbeispiel weisen die Führungen 6, 6', 10, 10', 11, 11' jeweils zwei Führungsschienen auf, können aber auch, wie beispielhaft an den Führungen 5, 5' verdeutlicht, auch nur eine Führungsschiene aufweisen. Prinzipiell können alle an der Bearbeitungsmaschine 1 verwendeten Führungen 5, 5',6, 6', 10, 10', 11, 11' beliebig gestaltet sein und beliebige Längen aufweisen. Bei der Festlegung der Längen der Führungen 5, 5', 6, 6' ist lediglich zu beachten, dass durch die Längen der Führungen 5, 5',6, 6' und den Abstand zwischen den Führungen 5, 5', 6, 6' im Wesentlichen die maximale Arbeitsbreite B der Bearbeitungsmaschine 1 bestimmt wird.

Anders als in Figur 2 kann die Bearbeitungsmaschine 1 in einer weiteren, nicht gezeigten Ausführungsform der vorliegenden Erfindung auch eine gemeinsame obere und/oder untere Führung 5", 6" für die Ständereinheiten 4, 4' und keine separaten Führungen 5, 5' und 6, 6' aufweisen.

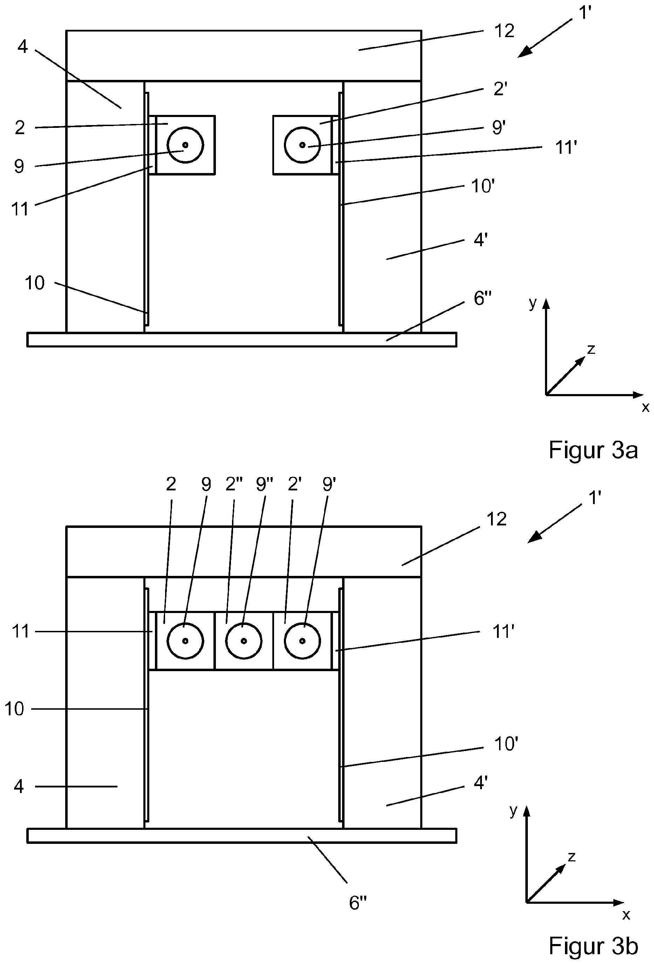

In Figur 3a ist schematisch ein weiteres Gestaltungsbespiel einer erfindungsgemäßen Bearbeitungsmaschine 1' in einer Vorderansicht gezeigt, wobei gleiche Bezugszeichen wie in den Figuren 1 und 2 gleiche Komponenten bezeichnen. Auf die obigen Ausführungsformen zu diesen Komponenten wird hiermit verwiesen.

In dem in Figur 3a veranschaulichten Ausführungsbeispiel sind die Ständereinheiten 4, 4' lediglich durch eine untere Führung 6" und keine oberen Führungen 5, 5' geführt. Anders als in den zuvor veranschaulichten Varianten der Bearbeitungsmaschine 1 werden die Ständereinheiten 4, 4' in Figur 3a auch auf einer gemeinsamen Führung 6" geführt und nicht von zwei separaten Führungen 6, 6'.

Die Ständereinheiten 4, 4' der in Figur 3a dargestellten Bearbeitungsmaschine 1' sind mittels einer Brücke 12 verbunden, wodurch die Bearbeitungseinheiten 2, 2' in der ersten Achsrichtung x lediglich gemeinsam verfahren werden können. In der zweiten Achsrichtung y und der dritten Achsrichtung z können die Bearbeitungseinheiten 2, 2' jedoch auch bei der Bearbeitungsmaschine 1' unabhängig voneinander bewegt werden. Es ist jedoch möglich, auch die Bewegungen der Bearbeitungseinheiten in der zweiten Achsrichtung y und der dritten Achsrichtung mittels hier nicht gezeigter mechanischer Kopplungsvorrichtungen zu koppeln.

Ferner kann die Bearbeitungsmaschine 1' auch derart ausgestaltet sein, dass die Ständereinheiten 4, 4' völlig separat voneinander durch wenigstens eine untere Führung 6, 6', 6" geführt werden, ohne dass die Ständereinheiten 4, 4' eine obere Führung 5, 5' oder eine Brücke 12, durch welche die Ständereinheiten 4, 4' miteinander verbunden sind, aufweisen. Bei einer solchen Ausgestaltungsvariante der Bearbeitungseinheit 1' sind die Ständereinheiten 4, 4' trotz der fehlenden wenigstens einen oberen Führung 5, 5' unabhängig voneinander in der ersten Achsrichtung x verfahrbar.

Die Arbeitsbreite B der in Figur 3a gezeigten Bearbeitungsmaschine 1' ist anders als bei Ausführungsformen der Bearbeitungsmaschine 1, bei welchen die Ständereinheiten 4, 4' verfahrbar sind, nicht variierbar. Die Arbeitsbreite B der in Figur 3a veranschaulichten Bearbeitungsmaschine 1 ist jedoch derart groß ausgebildet, dass zwischen den beiden Bearbeitungseinheiten 2, 2' wenigstens eine weitere Bearbeitungseinheit 2" vorgesehen werden kann. Hierbei weist die zusätzlich vorgesehene Bearbeitungseinheit 2" vorzugsweise den gleichen Verfahrweg und/oder die gleiche Bauweise wie die beiden bereits vorhandenen Bearbeitungseinheiten 2, 2' der Bearbeitungsmaschine 1' auf.

Die Bearbeitungsmaschine 1' aus Figur 3a weist durch die Verbindung der Ständereinheiten 4, 4' mittels der Brücke 12 eine besonders hohe mechanische Belastbarkeit auf.

Figur 3b zeigt schematisch die in Figur 3a gezeigte Bearbeitungsmaschine 1' mit einer zusätzlichen Bearbeitungseinheit 2" in einer Vorderansicht. Dabei bezeichnen bereits oben verwendete Bezugszeichen gleiche Komponenten, auf deren vorhergehende Beschreibung hiermit Bezug genommen wird.

Die zusätzlich zwischen den Bearbeitungseinheiten 2, 2' vorgesehene Bearbeitungseinheit 2" ist in dem gezeigten Ausführungsbeispiel mit den Bearbeitungseinheiten 2, 2' mechanisch gekoppelt, sodass alle drei Bearbeitungseinheiten 2, 2', 2" die gleichen Bewegungen, zumindest in der ersten Achsrichtung x und der zweiten Achsrichtung y, ausführen.

Die zusätzliche Bearbeitungseinheit 2" kann jedoch in anderen, nicht gezeigten Ausführungsformen der vorliegenden Erfindung auch lediglich mit einer der beiden Bearbeitungseinheiten 2, 2' verbunden sein und/oder von wenigstens einer der beiden Bearbeitungseinheit 2, 2' beabstandet sein. So müssen nicht alle Bearbeitungseinheiten 2, 2', 2" die gleichen Bewegungen ausführen, es führen hier lediglich die zusätzlich eingefügte Bearbeitungseinheit 2" und wenigstens eine mit ihr gekoppelte Bearbeitungseinheit 2 oder 2' die gleichen Bewegungen aus. Dagegen ist bei einer solchen Ausführungsform die nicht mit der zusätzlich vorgesehenen Bearbeitungseinheit 2" gekoppelte Bearbeitungseinheit 2 oder 2' unabhängig von den beiden anderen Bearbeitungseinheiten 2 oder 2' und 2" bewegbar.

Anders als in dem in den Figuren 3a und 3b gezeigten Ausführungsbeispiel der Bearbeitungsmaschine 1' kann die Arbeitsbreite B der Bearbeitungsmaschine auch derart groß ausgebildet sein, dass mehr als eine weitere Bearbeitungseinheit 2" zwischen den beiden Bearbeitungseinheiten 2, 2' vorgesehen werden kann. Hierbei ist es frei wählbar, welche Bearbeitungseinheiten und Bewegungsrichtungen gekoppelt werden. Besonders empfehlenswert ist es jedoch, wenn Kopplungen zwischen den Bearbeitungseinheiten einer solchen erfindungsgemäßen Bearbeitungsmaschine wieder lösbar ausgestaltet sind.

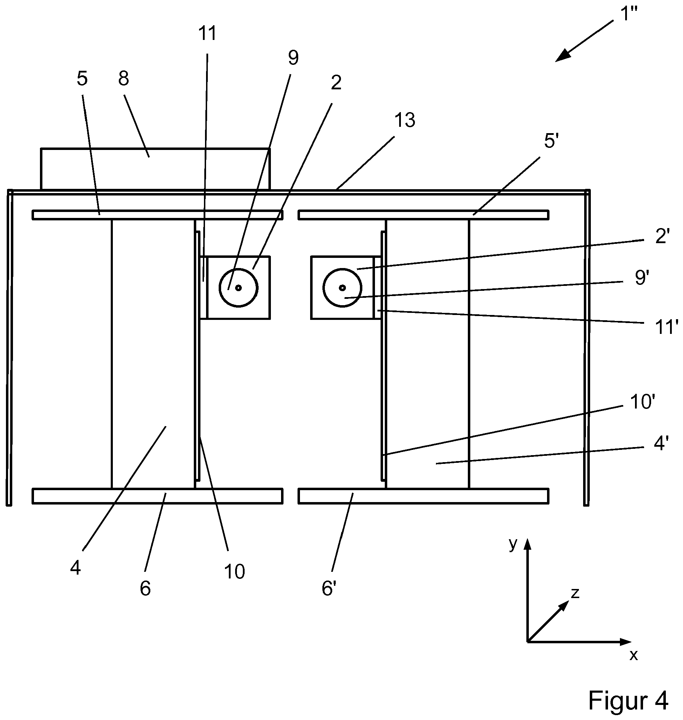

Figur 4 zeigt schematisch eine weitere Ausgestaltungsvariante einer erfindungsgemäßen Bearbeitungsmaschine 1" in einer Vorderansicht, wobei auch hier bereits verwendete Bezugszeichen gleiche Komponenten der Bearbeitungsmaschine 1" wie in den oben beschriebenen Figuren bezeichnen.

In Figur 4 ist schematisch ein Gehäuse 13 der Bearbeitungsmaschine 1" dargestellt, wobei auf der nach oben zeigenden Dachfläche des Gehäuses 13 ein Schaltschrank 8 vorgesehen ist. Durch die Anordnung des Schaltschrankes 8 auf dem Dach der Bearbeitungsmaschine 1" ist die Bearbeitungsmaschine 1" für deren Bediener frei zugänglich, wodurch mögliche Fehlerquellen, Wartungen oder Reparaturen an der Bearbeitungsmaschine 1" schnell und einfach durchgeführt werden können. Zudem bietet das Vorsehen des Schaltschrankes 8 auf der Bearbeitungsmaschine 1" den Vorteil, dass der Platzbedarf der kompletten Bearbeitungsmaschine 1" minimiert werden kann und damit Gesamtkosten gesenkt werden können.

Anders als in dem in Figur 4 gezeigten Ausführungsbeispiel kann der Schaltschrank 8 auch in einem oberen Bereich einer Seitenwand des Gehäuses 13 der Bearbeitungsmaschine 1" vorgesehen sein. Dies bietet den Vorteil, dass die Bearbeitungsmaschine 1" für deren Bediener, ebenso wie wenn der Schaltschrank 8 auf dem Dach der Bearbeitungsmaschine 1" platziert ist, zugänglich bleibt und der Schaltschrank 8 trotz allem für Bediener der Bearbeitungsmaschine 1" erreichbar ist.

Im einfachsten Fall ist der Schaltschrank 8 durch Schraub- oder Nietverbindungen mit dem Gehäuse 13 verbunden. Ebenso kann an dem Gehäuse 13 der Bearbeitungsmaschine 1" aber auch eine extra Vorrichtung zum Halten des Schaltschrankes 8 vorgesehen sein. Für eine mögliche Montage und/oder Demontage der Bearbeitungsmaschine 1" bietet es sich jedoch an, den Schaltschrank 8 lösbar mit dem Gehäuse 13 der Bearbeitungsmaschine 1" zu verbinden.

Umfasst die Bearbeitungsmaschine 1" mehrere Schaltschränke 8, ist es zudem möglich, auch mehrere Schaltschränke 8 auf dem Dach und/oder an den oberen Bereichen der Seitenwände der Bearbeitungsmaschine 1" verteilt anzubringen. Entsprechend kann die Anordnung des wenigstens einen Schaltschrankes 8 in Abhängigkeit des Standortes der Bearbeitungsmaschine 1" ausgewählt werden.

Figur 4 zeigt lediglich ein Ausführungsbeispiel einer erfindungsgemäßen Bearbeitungsmaschine 1", an deren Gehäuse 13, insbesondere auf deren Dach ein Schaltschrank 8 vorgesehen ist. In anderen Ausführungsvarianten kann das Innere des Gehäuses 13 der Bearbeitungsmaschine 1", wie in den vorhergehenden Ausgestaltungsbeispielen beschrieben, auch anders ausgestaltet sein. So kann die Bearbeitungsmaschine 1" beispielsweise anders als in der Darstellung von Figur 4 durchgängige Führungen 5", 6" und keine separaten Führungen 5, 5', 6, 6' aufweisen. Ferner kann auch eine andere Anzahl an Bearbeitungseinheiten 2, 2' in der Bearbeitungsmaschine 1" vorgesehen sein. Ebenso können die Ständereinheiten 4, 4' auch lediglich unten geführt sein und oben gegebenenfalls mittels einer Brücke verbunden sein.

## Patentansprüche

1. Bearbeitungsmaschine (1, 1', 1") mit wenigstens einer ersten und einer zweiten in einer ersten Achsrichtung (x) nebeneinander angeordneten und in einer zweiten und einer dritten Achsrichtung (y, z) unabhängig voneinander verfahrbaren Bearbeitungseinheit (2, 2'), die auf einem gemeinsamen Maschinenbett (3) angeordnet sind, wobei beidseitig der Bearbeitungseinheiten (2, 2') in der ersten Achsrichtung (x) voneinander beabstandete Ständereinheiten (4, 4') vorgesehen sind,
**dadurch gekennzeichnet,**
**dass** die Bearbeitungseinheiten (2, 2') durch obere und untere Führungen (5, 5', 6, 6', 6") geführt sind und in der ersten, der zweiten und der dritten Achsrichtung (x, y, z) unabhängig voneinander verfahrbar sind, wobei die oberen und unteren Führungen (5, 5', 6. 6') an nach oben bzw. unten zeigenden Seiten der Ständereinheiten (4, 4') vorgesehen sind, sodass die Ständereinheiten (4, 4') miteinander, zueinander und gegeneinander verfahrbar sind, und die Führungen (5, 5', 6, 6') durch Anbringen wenigstens eines zusätzlichen Führungselementes, durch das der Abstand zwischen wenigstens zwei der Bearbeitungseinheiten (2, 2', 2") vergrößert werden kann, verlängerbar sind,
oder
die Bearbeitungsmaschine (1') eine durch den Abstand zwischen den Ständereinheiten (4, 4') bestimmte, feste, aber so festgelegte Arbeitsbreite (B) aufweist, dass wenigstens eine dritte Bearbeitungseinheit (2") in der ersten Achsrichtung (x) neben der ersten und/oder der zweiten Bearbeitungseinheit (2, 2') vorsehbar und wieder ausbaubar ist, wobei alle Bearbeitungseinheiten (2, 2', 2") baugleich sind und/oder gleiche Verfahrwege aufweisen und wobei die Ständereinheiten (4, 4') der Bearbeitungsmaschine (1') mittels einer Brücke (12) verbunden sind, durch die die Bearbeitungseinheiten (2, 2', 2") in der ersten Achsrichtung (x) lediglich gemeinsam verfahrbar sind.

2. Bearbeitungsmaschine nach Anspruch 1, **dadurch gekennzeichnet, dass** die Ständereinheiten (4, 4') an den oberen und unteren Führungen (5, 5', 6, 6', 6") geführt verfahrbar sind.

3. Bearbeitungsmaschine nach wenigstens einem der vorhergehenden Ansprüche, **dadurch gekennzeichnet, dass** wenigstens zwei der Bearbeitungseinheiten (2, 2', 2") in der ersten, der zweiten und/oder der dritten Achsrichtung (x, y, z) gekoppelt oder koppel- und entkoppelbar sind.

4. Bearbeitungsmaschine nach wenigstens einem der vorhergehenden Ansprüche, **dadurch gekennzeichnet, dass** wenigstens eine der Bearbeitungseinheiten (2, 2', 2") um die erste und/oder die zweite Achsrichtung (x, y) schwenkbar ist.

5. Bearbeitungsmaschine nach Anspruch 4, **dadurch gekennzeichnet, dass** wenigstens zwei der Bearbeitungseinheiten (2, 2', 2") in ihrer Schwenkbewegung um die erste und/oder zweite Achsrichtung (x, y) gekoppelt oder koppel- und entkoppelbar sind.

6. Bearbeitungsmaschine nach wenigstens einem der vorhergehenden Ansprüche, **dadurch gekennzeichnet, dass** wenigstens ein Schaltschrank (8) der Bearbeitungsmaschine (1") in einer oberen Hälfte der Bearbeitungsmaschine (1") angeordnet ist.

## Claims

1. Machine tool (1, 1', 1") with at least one first and one second machining unit (2, 2') being arranged adjacent to each other in a first axial direction (x) and being movable independently from each other in a second and third axial direction (y, z), being arranged on a common machine bed (3), wherein stand units (4, 4') spaced apart in the first axial direction (x) are provided on both sides of the machining units (2, 2'), **characterized in that**
the machining units (2, 2') are guided through upper and lower guides (5, 5', 6, 6', 6") and are movable independently from each other in the first, the second and the third axial direction (x, y, z), wherein the upper and lower guides (5, 5', 6, 6') are provided on sides of the stand units (4, 4') pointing upwards or downwards so that the stand units (4, 4') are movable with each other, towards each other and against each other and the guides (5, 5', 6, 6') are extendable by attaching at least one additional guiding element by which the distance between at least two of the machining units (2, 2', 2") can be increased
or
the machine tool (1') comprises a fixed working width (B) determined by the distance between the stand units (4, 4') but defined in such a way that at least one third machining unit (2") is providable and removable again in the first axial direction (x) adjacent to the first and/or the second machining unit (2, 2'), wherein all machining units (2, 2', 2") are structurally identical and/or comprise the same travel paths and wherein the stand units (4, 4') of the machine tool (1, 1') are connected by means of a bridge (12) through which the machining units (2, 2', 2") are only jointly movable in the first axial direction (x).

2. Machine tool according to claim 1, **characterized in that** the stand units (4, 4') are movable guided on the upper and lower guides (5, 5', 6, 6', 6").

3. Machine tool according to at least one of the preceding claims, **characterized in that** at least two of the machining units (2, 2', 2") are coupled or couplable and decouplable in the first, the second and/or the third axial direction (x, y, z).

4. Machine tool according to at least one of the preceding claims, **characterized in that** at least one of the machining tools (2, 2', 2") is swivable around the first and/or the second axial direction (x, y).

5. Machining tool according to claim 4, **characterized in that** at least two of the machining units (2, 2', 2") are coupled or couplable and decouplable in their swivel movement around the first and/or second axial direction (x, y).

6. Machine tool according to at least one of the preceding claims, **characterized in that** the at least one control cabinet (8) of the machine tool (1") is arranged in an upper half of the machine tool (1").

## Revendications

1. Machine d'usinage (1, 1', 1") comprenant au moins une première et une deuxième unité d'usinage (2, 2') étant agencées l'une à côté de l'autre dans une première direction axiale (x) et pouvant se déplacer indépendamment l'une de l'autre dans une deuxième et une troisième direction axiale (y, z) et étant agencées sur un banc de machine commun (3) ; des unités de support (4, 4') étant prévues à distance les unes des autres aux deux côtés des unités d'usinage (2, 2') dans la première direction axiale (x),
**caractérisée en ce que**
les unités d'usinage (2, 2') sont guidées par des guides supérieurs et inférieurs (5, 5', 6, 6', 6") et peuvent se déplacer indépendamment l'une de l'autre dans la première, la deuxième et la troisième direction axiale (x, y, z) ; les guides supérieurs et inférieurs (5, 5', 6, 6') étant prévus sur des faces des unités de support (4, 4') orientées vers le haut ou vers la bas, de sorte que les unités de support (4, 4') peuvent se déplacer l'une par rapport à l'autre, en même direction ou en direction contraire ; et les guides (5, 5', 6, 6') pouvant être prolongés en employant au moins un élément de guide additionnel, par lequel la distance entre les au moins deux unités d'usinage (2, 2', 2") peut être augmentée,
ou
la machine d'usinage (1') présente une largeur de travail (B) déterminé par la distance entre les unités de support (4, 4'), mais déterminé de sorte que au moins une troisième unité d'usinage (2") peut être agencée à côté de la première et/ou de la deuxième unité d'usinage (2, 2') dans la première direction axiale (x) qu'elle et peut être démontée, les unités d'usinage (2, 2', 2") étant de conception identique et/ou présentant des courses de déplacement identiques, et les unités de support (4, 4') de la machine d'usinage (1') sont joints ensemble par un pont (12), par lequel les unités d'usinage (2, 2', 2") peuvent être déplacées seulement ensembles.

2. Machine d'usinage selon la revendication 1, **caractérisée en ce que** les unités de support (4, 4') sont déplaçables étant guidées par les guides supérieurs et inférieurs (5, 5', 6, 6', 6").

3. Machine d'usinage selon au moins l'une des revendications précédentes, **caractérisée en ce que** au moins deux des unités d'usinage (2, 2', 2") sont couplées ou couplables et découplables dans la première, la deuxième et/ou la troisième direction axiale (x, y, z).

4. Machine d'usinage selon au moins l'une des revendications précédentes, **caractérisée en ce que** au moins une des unités d'usinage (2, 2', 2") peut pivoter autour de la première et/ou la deuxième direction axiale (x, y).

5. Machine d'usinage selon la revendication 4, **caractérisée en ce que** au moins deux des unités d'usinage (2, 2', 2") sont couplées ou couplables et découplables dans leur mouvement pivotant autour de la première et/ou la deuxième direction axiale (x, y).

6. Machine d'usinage selon au moins l'une des revendications précédentes, **caractérisée en ce que** au moins une boîte de contrôle (8) de la machine d'usinage (1") est agencée dans une moitié supérieure de la machine d'usinage.
